# EUROPEAN PATENT APPLICATION

(11) **EP 1 724 168 A1**
(43) Date of publication of application: **22.11.2006**
(21) Application number: 06252530.8
(22) Date of filing: 15.05.2006
(51) Int. Cl.: B60R 25/04, B60R 25/10

(54) **Vehicle recovery system and method**

(30) Priority: 19.05.2005 US 132556
(71) Applicant: Navteq North America, LLC, Chicago IL 60854 (US)
(72) Inventor: Casino, Roy, Mundelein Illinois 60060 (US)
(74) Representative: Palmer, Jonathan R.

(57) **Abstract**

A method and system are disclosed for recovering a vehicle that is being operated without authorization. The current position of the vehicle is determined relative to a road network. Then, a recovery action is taken that takes into account the current position of the vehicle. The recovery action may include stopping the vehicle, slowing down the vehicle, or some other action. The recovery action may be deferred until the vehicle is determined to be on a road where taking the recovery action is appropriate.

## Description

### BACKGROUND OF THE INVENTION

The present invention relates to a system and method for recovering vehicles that are being operated without proper authorization.

Various devices and systems are available for preventing theft of vehicles or recovering vehicles that have already been stolen. One solution for recovering a stolen vehicle is a degrade and recover system. A degrade and recover system allows a vehicle owner (or another authority, such as the police) to remotely activate equipment in a stolen vehicle that degrades the performance in the vehicle so that it can be safely recovered. With this type of system, if a vehicle is stolen, the owner (or police) can activate the degrade and recover system changing some aspect of the vehicle's performance. For example, selected electronics will stop working, the radio and air conditioning will deactivate, the vehicle will slow down becoming essentially not drivable, and so on. This degradation is meant to make it difficult or undesirable to steal a vehicle because it either becomes useless to sell (as nothing works anymore) or it simply becomes too difficult to drive because the engine and transmission only allow limited performance. After recovery, the owner can reset the system through use of a code. The vehicle then becomes completely operational again after resetting the system.

Conventional degrade and recover systems may help recover stolen vehicles. However, there are considerations to be addressed. For example, it may not be appropriate to degrade vehicle performance under certain circumstances such as when it is being operated on a high speed thoroughfare. Accordingly, there exists room for improvement.

### SUMMARY OF THE INVENTION

To address these and other objectives, the present invention includes a method and system for recovering a vehicle that is being operated without authorization. According to an embodiment of the disclosed system, the current position of the vehicle is determined relative to a road network. Then, a recovery action is taken that takes into account the current position of the vehicle. The recovery action may include stopping the vehicle, slowing down the vehicle, or some other action. The recovery action may be deferred until the vehicle is determined to be on a road where taking the recovery action is appropriate.

### BRIEF DESCRIPTION OF THE DRAWINGS

Figure 1 is an illustration of an embodiment of a system for recovering vehicles that are being operated without proper authorization.
Figure 2 is a block diagram depicting components of the vehicle recovery system shown in Figure 1.
Figure 3 is a flowchart that shows steps in a process performed by the vehicle recovery system of Figure 1.

### DETAILED DESCRIPTION OF THE PRESENTLY PREFERRED EMBODIMENTS

### I. FIRST EMBODIMENT

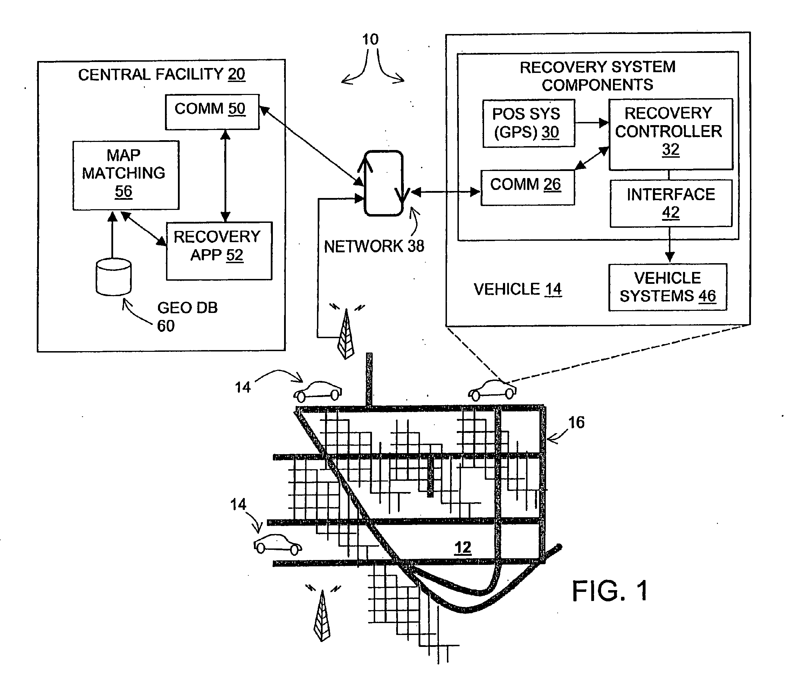

Figure 1 shows a first embodiment of a vehicle recovery system 10. The vehicle recovery system 10 can be used to recover vehicles that are operated or taken without proper authorization. For example, the vehicle recovery system 10 can be used to recover stolen vehicles. The vehicle recovery system 10 can also be used to recover misappropriated rental vehicles, vehicles to be repossessed, or vehicles that need to be recovered for any other reason.

The vehicle recovery system 10 is located in a geographic region 12. The region 12 may include a metropolitan area, a state, a country or any other area, or a combination of areas. Located in the region 12 are vehicles 14. The vehicles 14 are operated on a road network 16 located in the region 12. The embodiment of the vehicle recovery system 10 shown in Figure 1 includes components located in a central facility 20 and components located in each vehicle 14 that has the vehicle recovery system installed.

Referring to Figure 1, the vehicle 14 includes a communications system 26, a positioning system 30, and a recovery controller 32. The communications system 26 is capable of conducting an exchange of data over a data network 38 with the remotely located central facility 20. In this embodiment, at least a part of the data network 38 is a wireless network. The communications system 26 may use any available technology for exchanging data via the communications network 38, including cellular, satellite, etc.

The positioning system 30 determines the current position of the vehicle 14. The positioning system 30 may include a GPS unit, inertial sensors, a compass, or a combination of these or similar components. The positioning system 30 may determine the absolute or relative position of the vehicle. For example, the positioning system 30 may determine the geographic coordinates (e.g., latitude and longitude) of the vehicle. Alternatively, the positioning system 30 may determine the position of the vehicle relative to something else, e.g., the position of the vehicle relative to the road network. The positioning system 30 may be part of a navigation system installed in the vehicle. Alternatively, the vehicle may not have a navigation system or the positioning system 30 may be separate from the navigation system in the vehicle.

The recovery controller 32 is operatively coupled to the communications system 26 and the positioning system 30. The recovery controller 32 is capable of receiving data from the positioning system 30 that indicates the current vehicle position, processing the data if necessary, and using the communications system 26 to transmit the data to the central facility 20.

The controller 32 includes an interface 42 to vehicle systems 46. The vehicle systems 46 may include the brakes, engine, throttle, transmission, air conditioning, lights, etc., in the vehicle.

The central facility 20 includes a combination of hardware and software components. The central facility 20 includes a communication system 50 capable of exchanging data with the vehicles over the data network 38. The central facility 20 includes a recovery application 52. The central facility 20 also includes a map matching application 56. The map matching application 56 uses a map database 60. The map database 60 includes information about the positions of roads and intersections throughout the region 12. Given a set of geographic coordinates, the map matching application 56 uses the map database 60 to identify the road position that corresponds to the geographic coordinates. The map matching application 56 may also determine a position along a road, a direction of travel, a speed of travel, and other information.

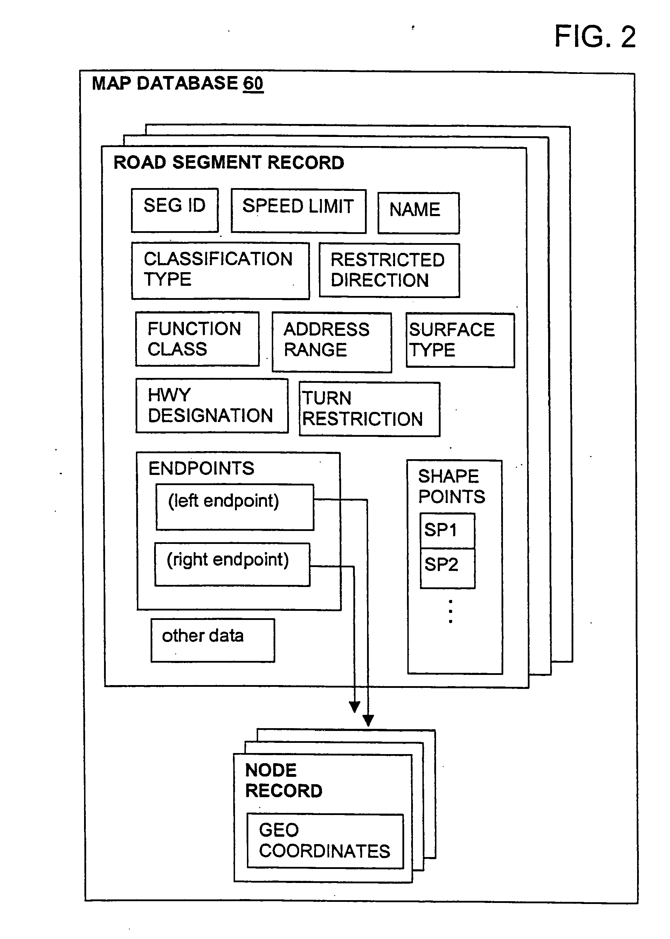

Figure 2 is a diagram that shows some of the components of the map database 60. The map database 60 includes data specifying the positions of the roads in the covered geographic region. The map database 60 may also include information about features or characteristics of the represented roads including the type of road (e.g., controlled access, ramp, bridge, tunnel, toll road, ferry, and so on), a functional rank, a permitted direction of travel (e.g., one-way streets), street addresses (or address ranges) along the roads, a street name, a highway designation of the road, speed limits (or a speed limit range) along the roads, turn restrictions at intersections, and so on. In one embodiment, a suitable map database is provided by NAVTEQ Corporation, of Chicago, Illinois. However, it is understood that the inventive concepts disclosed herein are not restricted to any particular source of data.

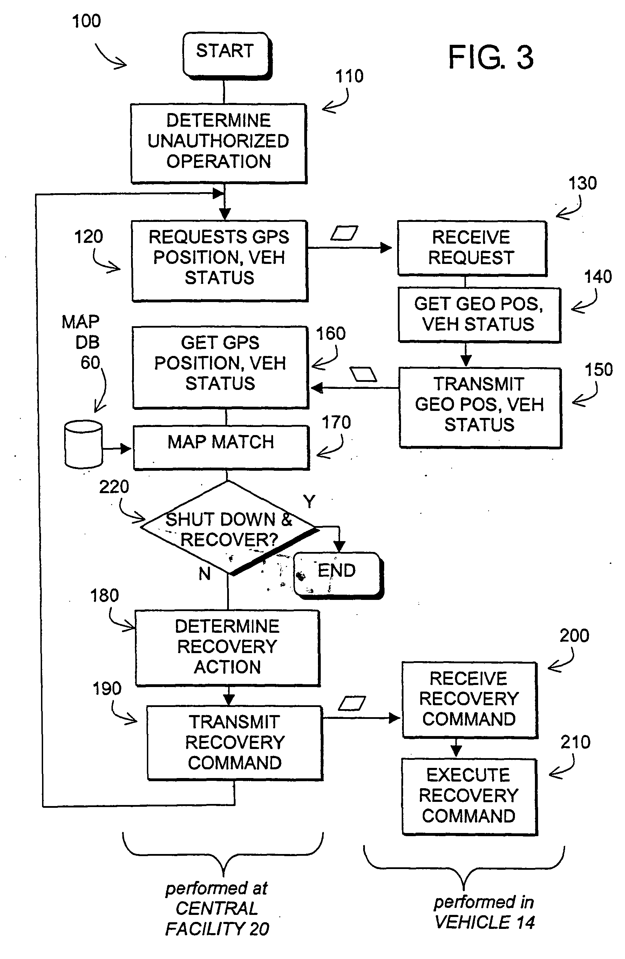

Figure 3 is a flowchart that shows a process 100 performed by the vehicle recovery system 10 of Figure 1. The process 100 begins with a determination that the vehicle is being operated without proper authorization (Step 110). For example, the vehicle may have been stolen. Alternatively, the vehicle may be a rental vehicle that had not been returned. There are various different situations under which a vehicle may be operated without proper authorization.

The determination that the vehicle is being operated without proper authorization may be made by an owner notifying authorities, such as the police. Alternatively, the determination that the vehicle is being operated without proper authorization may be made automatically, e.g., if the vehicle is being operated without an authorized key or RFID tag. According to another alternative, the determination that the vehicle is being operated without proper authorization may be made automatically by a lapse of time without an authorization code being entered. In another alternative, the determination that the vehicle is being operated without proper authorization may be made automatically by the vehicle being taken outside an authorized area.

After the determination is made that the vehicle is being operated without proper authorization, the central facility 20 sends a request to the vehicle to obtain the vehicle's position and the vehicle's operating status (Step 120). This request is transmitted via the data network 38. The request is received in the vehicle 14 using the vehicle's communications system 26 (Step 130). In the vehicle 14, the vehicle's position and status are determined (Step 140). In this embodiment, the vehicle position corresponds to its geographic coordinates determined by a GPS unit located in the vehicle. Data indicating the vehicle's position and status are transmitted from the vehicle to the central facility 20 using the vehicle's communications system and the data network 38 (Step 150).

The central facility 20 receives the information from the vehicle that indicates its position and status (Step 160). Then, the vehicle's position relative to the road network is determined (Step 170). This is determined using the map matching application 56 and the map database 60. In this embodiment, determining the vehicle position on the road network includes identifying the specific road on which the vehicle is being operated, the specific position along the road on which the vehicle is being operated, and the direction of travel of the vehicle on the road. Other information about the vehicle position may also be determined.

Once the position of the vehicle on the road network is determined, an appropriate recovery action is determined (Step 180). The central facility 20 may use a recovery application for this purpose or alternatively the recovery action may be determined based on personal experience. The recovery action is determined based on the position of the vehicle on the road network, including the type of road on which the vehicle is being operated. In this embodiment, the selection of the appropriate recovery action may include disabling the vehicle by causing the vehicle to slow down or stop taking into account the position of the vehicle on the road upon which it is being operated in order to reduce risk to any occupants of the vehicle, persons in the vicinity of the vehicle, or property. For example, if the vehicle is being operated on residential streets where the vehicle comes to stops at intersections, the recovery action may include causing the vehicle to remain stopped after it has been brought to a stop at an intersection. Alternatively, if the vehicle is being operated at the speed limit on an expressway, the recovery action may include deferring any disabling action until the vehicle is no longer being operated on the expressway.

In addition to the type of road on which the vehicle is being operated, other factors may be considered when determining an appropriate recovery action. Some of these other factors include the type of road surface, the presence of other vehicles in the area, the functional class of the road, the weather conditions, the time of day, the vehicle speed and bearing, engine parameters, remaining fuel supply, and so on.

Once the recovery action is determined, an appropriate recovery command is transmitted to the vehicle (Step 190). The recovery command includes the data needed for implementing the recovery action in the vehicle. The vehicle receives the recovery command (Step 200) and executes the recovery command (Step 210). The recovery system controller 32 in the vehicle interfaces with the appropriate vehicle systems to execute the recovery action.

After the recovery action has been transmitted to the vehicle, the process continues by obtaining the vehicle position and status again (Steps 120, 130, 140, 150, and 160). This new information is used by the map matching application 56 to determine a new current position of the vehicle on the road network (Step 170, again). If the vehicle has not yet been shut down and recovered (Step 220), an appropriate recovery action is determined and transmitted to the vehicle (Steps 180 and 190, again). Once the vehicle has been shut down and recovered (Step 220), the process 100 is stopped.

### II. ALTERNATIVES

It was stated above that a positioning system, such as a GPS unit, in the vehicle could be used to determine the current position of the vehicle. Embodiments are not limited to any particular technology for determining the current vehicle position. For example, the vehicle position may be determined in whole or in part by a system located external to the vehicle. For example, the vehicle position may be determined by radio wave reception (e.g., triangulation, time-of-reception, signal strength). If the vehicle position is determined outside the vehicle, data indicating the vehicle position may be transmitted from the external source (e.g., the facility that processes the radio wave receptions) to the central facility.

The vehicle position may also be determined by other types of technology, such as dead reckoning, or equipment, such as inertial sensors, differential wheel speed sensors, a compass, and so on.

The vehicle position may be determined using a map database located in the vehicle. In such a case, the step of map matching to determine a vehicle position relative to the road network may be performed in the vehicle instead of at a central facility. In this scenario, data indicating the vehicle position relative to the road network may be transmitted to the central facility where an appropriate recovery action is determined.

In another alternative, the recovery action may be determined by a program located in the vehicle. In this alternative, the entire recovery system process may be performed in the vehicle. According to this alternative, the vehicle position relative to the road network is determined using a map database in the vehicle and an appropriate recovery action is determined and executed automatically using programmed recovery action alternatives stored in the vehicle.

There are various alternative recovery actions that can be executed. Some of these recovery actions include the following.

One recovery action calls for recognizing that a vehicle is at a stop sign and then preventing it from moving further, In this case, the recovery action calls for halting the vehicle and shutting it down.

Another recovery action calls for recognizing that a vehicle is at a stop sign and then only allowing the vehicle to pull off to the side of the road.

Another recovery action includes commanding the vehicle pull itself off the road and park along the side of the road to wait for recovery.

A recovery action includes preventing the vehicle from being operated faster than 45 miles per hour if on a limited access road.

Another recovery action limits the area in which a vehicle can be driven, i.e., the vehicle can be driven as long as it stays in a specified area. This action might help catch a thief since the thief would be unaware that the vehicle was being monitored for possible degradation until the vehicle attempted to leave a certain area. As long as the thief stayed in a certain area, the vehicle could be driven. The police would presumably monitor the vehicle position and as soon as the thief attempted to leave the safe zone, the vehicle performance would degrade. Alternatively, the police could monitor a vehicle while it is in a specified zone in order to evaluate possible options for stopping the vehicle or to get more police officers on the scene. As long as the vehicle was in a certain area, the police would know that they have time to evaluate and act while knowing that the vehicle would not be able to get very far even it was driven outside the allowed area.

Embodiments of the disclosed system can be used for purposes other than recovery. For example, the disclosed system can be used to degrade performance of a vehicle if the vehicle leaves a specified area. According to this example, performance of a delivery truck could be degraded if it is driven outside a delivery zone. In another example, police may use the disclosed system to degrade performance of a vehicle being chased or followed.

In another example, the disclosed vehicle system can be used to degrade performance of a vehicle that travels beyond a "geo-fence." In this example, an authorized user could specify that a particular vehicle is only allowed to travel in a particular region surrounded by a geo-fence, i.e., a virtual fence specified using a digital map. If the vehicle leaves the fenced area (e.g., by a certain threshold distance), then degradation of performance may take place.

In still another example, performance of a vehicle taken without authorization could be degraded when police are near or when the vehicle is in a safe zone. In the former case, a vehicle may be allowed to operate normally, but when police get close enough, vehicle performance is degraded for easy apprehension. In the latter case, the vehicle may simply be monitored until driven to a safe area for apprehension by police, e.g., away from schools or busy locations.

### III. ADVANTAGES

Embodiments of the disclosed system provide several advantages. For example, some of the disclosed embodiments provide an ability to degrade vehicle performance where it makes sense to do so, e.g., to slow down a vehicle only on roads with slow speed limits. Degrading vehicle performance may be avoided while the vehicle is on a highspeed road.

It is intended that the foregoing detailed description be regarded as illustrative rather than limiting and that it is understood that the following claims including all equivalents are intended to define the scope of the invention.

## Claims

1. A method of recovering a vehicle comprising the steps of:
determining a current location of the vehicle; and
disabling the vehicle taking into account the current location.

2. The method of claim 1 further comprising:
before the step of determining the current location of the vehicle, determining that the vehicle has been taken without proper authorization.

3. The method of claim 1 wherein the step of disabling comprises one of:
stopping the vehicle; and
limiting a maximum speed of the vehicle.

4. The method of claim 1 further comprising:
after determining that the vehicle is being operated on a high speed road, deferring the step of disabling until the vehicle is not being operated on the high speed road.

5. The method of claim 1 wherein the step of determining further comprises:
determining a road upon which the vehicle is being operated.

6. The method of claim 1 wherein the step of determining the current location of the vehicle further comprises:
determining a geographic location of the vehicle; and
using the geographic location to determine a road upon which the vehicle is being operated.

7. The method of claim 6 wherein the geographic location is determined by a GPS unit located in the vehicle.

8. The method of claim 6 further comprising:
transmitting data from the vehicle that indicates the geographic location; and
wherein the road upon which the vehicle is being operated is determined at a central facility.

9. The method of claim 6 or 8 wherein the road upon which the vehicle is being operated is determined using a map database.

10. A method of recovering a vehicle that is being operated without authorization comprising:
matching a location of the vehicle to a road network represented by a map database; and
disabling the vehicle at an appropriate on the road network.

11. The method of claim 10 further comprising:
before the step of matching the location of the vehicle to the road network represented by the map database, determining that the vehicle had been taken without proper authorization.

12. The method of claim 10 wherein the step of disabling comprises one of:
causing a vehicle system to cease functioning; and
causing the vehicle to slow down.

13. A method of recovering a misappropriated vehicle comprising the steps of:
determining a current position of the vehicle relative to a road; and
executing a recovery action that takes into account the current position.

14. The method of claim 13 wherein the recovery action comprises one of:
slowing down the vehicle; and
disabling the vehicle.

15. The method of claim 13 wherein the recovery action is continued until the vehicle is recovered.

16. The method of claim 13 wherein the recovery action comprises deferring disabling the vehicle until the vehicle is on an appropriate road.

17. A vehicle recovery system adapted to carry out a method according to any one of the preceding claims.
